# EUROPEAN PATENT APPLICATION

(11) **EP 1 635 198 A1**
(43) Date of publication of application: **15.03.2006**
(21) Application number: 05013673.8
(22) Date of filing: 24.06.2005
(51) Int. Cl.: G02B 5/18

(54) **Apodized diffraction grating with improved dynamic range**

(30) Priority: 13.09.2004 US 939674
(71) Applicant: Agilent Technologies, Inc., Palo Alto, CA 94306 (US)
(72) Inventor: Wildnauer, Kenneth R., Santa Rosa, CA 95404-2207 (US)
(74) Representative: Liesegang, Eva

(57) **Abstract**

An optical diffraction grating (200) includes a substrate (222) and a diffraction surface (225) comprising, for example, diffraction grooves (210). The diffraction grating has a spatially varying diffraction efficiency which increases or decreases as a function of distance from a reference location (220) at which an incident light beam (201) is received at the grating. Spatially varying the diffraction efficiency of the grating may be accomplished by selectively changing or modifying one or more grating design parameters such as the shape, size, depth, profile, pitch, and optical properties of the diffraction grooves at predetermined locations on the grating.

## Description

### BACKGROUND

### 1. Related Application

This application relates to U.S. patent application "Method and Apparatus To Improve The Dynamic Range of Optical Devices Using Spatial Apodization" by Kenneth R. Wildnauer and William Richard Trutna, Jr., which is filed on the same day as this application and is assigned to the assignee of this application.

### 2. Discussion of Related Art

Modem research and technology have created major changes in the lives of many people. A significant example of this is fiber optic communication. Over the last two decades, optical fiber lines have taken over and transformed the long distance telephone industry. Optical fibers also play a dominant role in making the Internet available around the world. When optical fiber replaces copper wire for long distance calls and Internet traffic, costs are dramatically lowered and the rate at which information can be conveyed is increased.

To maximize bandwidth, that is, the rate at which information can be transmitted, it is generally preferable for multiple information streams to be conveyed over the same optical fiber using multiple optical signals. Each optical signal is a light beam having a wavelength that is unique among the optical signals that share the optical fiber. Optical communication systems rely on optical devices that operate with single wavelength light beams that include a single optical signal, and with multi-wavelength light beams that include multiple optical signals. Such optical devices include, among others, diffraction gratings.

A diffraction grating typically includes a large number of diffraction lines. A multi-wavelength light beam that is incident on such a diffraction grating is diffracted causing single-wavelength components of the multi-wavelength beam to leave the grating at angles that vary depending on the wavelength of each component. One application of a diffraction grating is to separate single-wavelength light beam components out of a multi-wavelength light beam.

It is desirable for a diffraction grating to separate light beam components having only small wavelength differences. Small wavelength differences in light beam components are desirable because, for example, the conventional or "C" optical communication band can only support up to about 40 independent optical signals that are separated in wavelength by increments of about 200 gigahertz (GHz). However, if the optical communication system can support wavelengths that differ by only about 25 GHz, then the "C" band can support over 150 independent signals.

Light beam components separated by only small wavelength increments can be combined into a densely packed multi-wavelength beam. Using such a light beam enables an optical communication system to convey a large amount of information over a single optical fiber. However, such dense packing requires precise combination, separation, and other handling of these light beams.

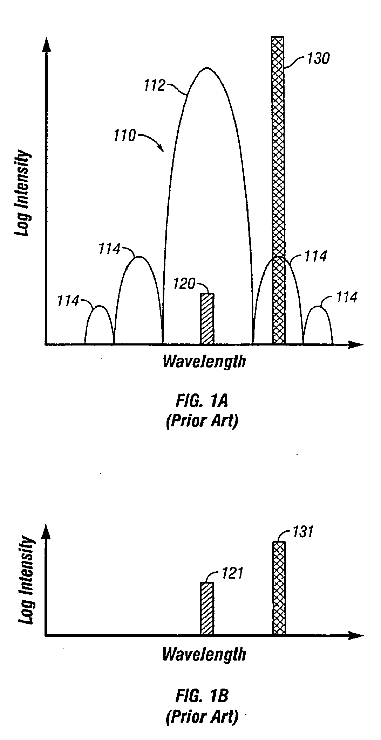

Fig. 1A is a graph showing a multi-wavelength beam superimposed on the transmission spectrum of an exemplary diffraction grating. Transmission spectrum 110 is graphed as the logarithm of the intensity of the light transmitted by the diffraction grating, with respect to the wavelength of the light.

The multi-wavelength light beam depicted in Fig. 1A has two light beam components 120 and 130. Each light beam component 120 and 130 has a single wavelength, and each component is graphed as the logarithm of the intensity of the component at the particular wavelength of the component. Notably, the intensity of component 120 is substantially lower than component 130.

Transmission spectrum 110 includes a single primary peak 112 and a number of side lobes 114. The center of primary peak 112 is the wavelength that corresponds to the diffraction grating. The wavelength of light beam component 120 coincides with the diffraction grating wavelength. Primary peak 112 allows light beams of the diffraction grating wavelength to pass through the diffraction grating without a substantial decrease in intensity.

Side lobes 114 within transmission spectrum 110 are shown occurring in a periodic pattern as the wavelength of the light varies. Side lobes 114 decrease in intensity as the wavelength difference increases between a particular side lobe and primary peak 112. The wavelength of component 130 is shown coinciding with one of the stronger side lobes.

Side lobes 114 may affect system performance since they allow light at undesired wavelengths to pass by the diffraction grating and its associated slits. For example, consider the multi-wavelength beam shown in Fig. 1A, denoted by components 120 and 130, which are communicated to a diffraction grating having the transmission spectrum shown there. The desired output from an optical system employing a diffraction grating would be all of light beam component 120, while all of light beam component 130 is blocked. However, as shown in Fig. 1B, this not always possible.

Fig. 1B is a graph showing the intensity of the light transmitted by a diffraction grating having the transmission spectrum shown in Fig. 1A. The intensity of light beam components 121 and 131 represent the output that would be provided by the diffraction grating.

Output component 121 typically has about the same intensity as input component 120 since the wavelength of the diffraction grating transmits substantially all of the input light at that particular wavelength. However, output component 131 has a much lower intensity than input component 130 because the diffraction grating substantially attenuates light at the wavelength of this component. Output component 131 has a somewhat higher intensity than output component 121 because input component 130 has a substantially higher intensity than input component 120. In general, the diffraction grating described in Fig. 1A cannot readily be used with a multi-wavelength input light beam since it is difficult or impossible to detect output component 121 because of interference from component 131. In addition, many conventional spectral filters have limited transmission width and rejection shape, which fall below the requirements of modem optical communication systems.

### SUMMARY OF THE INVENTION

An optical diffraction grating includes a substrate and a diffraction surface comprising, for example, diffraction grooves. The diffraction grating has a spatially varying diffraction efficiency which increases or decreases as a function of distance from a reference location at which an incident light beam is received at the grating. Spatially varying the diffraction efficiency of the grating may be accomplished by selectively changing or modifying one or more grating design parameters such as the shape, size, depth, profile, pitch, and optical properties of the diffraction grooves at predetermined locations on the grating.

### BRIEF DESCRIPTION OF THE DRAWING

The above and other aspects, features and advantages of the present invention will become more apparent upon consideration of the following description of preferred embodiments, taken in conjunction with the accompanying drawing figures, wherein:
Fig. 1A is a graph showing a multi-wavelength beam superimposed on the transmission spectrum of an exemplary diffraction grating, in accordance with prior art;
Fig. 1B is a graph showing the spectrum of the multi-wavelength light beam of Fig. 1A after being diffracted by the diffraction grating whose transmission spectrum is shown in Fig. 1 A;
Figs. 2A-2C show a diffraction grating in accordance with one embodiment of the invention, with Fig. 2A being a front view and Figs. 2B and 2C being side views taken along cross section lines 2B - 2B and 2C - 2C, respectively, shown in Fig. 2A;
Fig. 3 is an enlarged partial sectional view of a diffraction surface of the diffraction grating shown in Fig. 2B;
Figs. 4A-4D show various enlarged cross-sectional views of groove profiles that may be used for the diffraction grating of Figs. 2A-2C;
Fig. 5 is a graph comparing the transmission spectrum of Fig. 1A with the transmission spectrum obtained from the diffraction grating of Fig. 2A;
Fig. 6A is a diagram showing one example of a varying diffraction efficiency that may be obtained using the diffraction grating of Fig. 2A;
Fig. 6B is a graph of the diffraction efficiency function of the diffraction grating of Fig. 6A;
Fig. 7A is a block diagram showing components for fabricating an optical grating that diffracts and apodizes an input light beam in accordance with the invention;
Fig. 7B is a block diagram showing components for fabricating an optical grating that diffracts and apodizes an input light beam in accordance with an alternative embodiment of the invention;
Fig. 7C is a block diagram showing components for fabricating an optical grating that diffracts and apodizes an input light beam in accordance with yet another alternative embodiment of the invention;
Fig. 8A is a diagram showing an optical setup for the diffraction grating of Fig. 2A;
Fig. 8B is a diagram showing an optical setup of a reflective diffraction grating in accordance with the invention;
Fig. 9A is a diagram showing an optical setup of a reflective diffraction grating having a diffraction surface that is concave with respect to an incident input light beam, in accordance with the invention;
Fig. 9B is a block diagram showing an optical setup of a transmission diffraction grating having a diffraction surface that is convex with respect to an incident input light beam, in accordance with the invention; and
Fig. 10 is a flowchart showing exemplary operations for diffracting a light beam in accordance with embodiments of the invention.

### DETAILED DESCRIPTION OF PREFERRED EMBODIMENTS

In the following detailed description, reference is made to the accompanying drawing figures which form a part hereof, and which show by way of illustration specific embodiments of the invention. Other embodiments may be utilized, and structural, electrical, as well as procedural changes may be made without departing from the scope of the present invention.

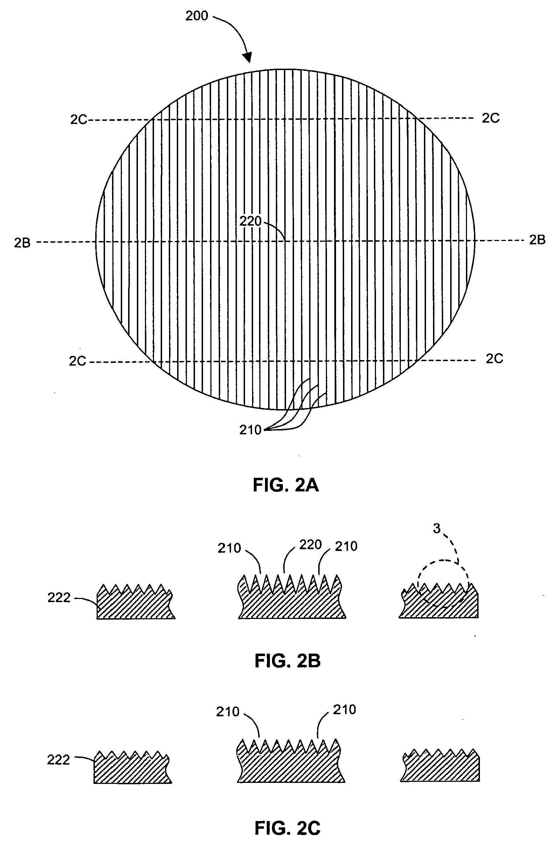

With reference to Fig. 2, diffraction grating 200 may be broadly described as having a spatially varying diffraction efficiency such that the diffraction efficiency (that is, the amount of light diffracted at a given order) of the grating changes as a function of displacement from a reference location on the grating. The spatially varying diffraction efficiency of the diffraction grating of the invention contrasts conventional gratings which have a diffraction efficiency that remains substantially the same over the entire grating surface.

In general, the diffraction efficiency of a grating depends on the many design parameters used to form the grating. In accordance with the invention, a diffraction grating having a spatially varying diffraction efficiency may therefore be obtained by selectively changing one or more of these design parameters at various locations on the grating. Possible design parameters of a diffraction grating that may be varied include, among others, the shape, size, depth, profile, pitch, and optical properties of the diffraction grooves, as well as the optical properties of materials formed over the diffraction grooves or grating substrate.

FIGS. 2A-2C illustrate an example of a diffraction grating in which the depth of the diffraction grooves is changed to achieve a spatially varying diffraction efficiency. In these figures, diffraction grating 200 is shown having individual diffraction grooves 210 which are equally spaced and substantially parallel. As shown by Figs. 2B and 2C, each diffraction groove 210 is defined by two intersecting plane surfaces. Diffraction grooves having an optimum depth for greatest diffraction efficiency are shown located at or near reference location 220, such as the center of the grating. Notably, the depth of these grooves becomes increasingly more shallow, and thus the grooves become increasingly less efficient at diffracting incident light, extending radially outwardly from reference location 220.

In one example, reference location 220 is located where the center of a light beam is incident on diffraction grating 200. Since reference location 220 is located within a region of diffraction grating 200 where the diffraction grooves are of optimum depth, maximum diffraction of this portion of the light beam is achieved. Remaining portions of the light beam are incident on increasingly shallower diffraction grooves located at increased distances from reference location 220. Because these diffraction grooves are shallower, the remaining portions of the light beam are diffracted less efficiently. The varying depth diffraction grooves of diffraction grating 200 may therefore provide a change in diffraction efficiency when diffracting a light beam incident on the grating. This change in diffraction efficiency results in spatial apodization of the light beam.

Figs. 2B and 2C show diffraction grating 200 comprising substrate 222 and diffraction grooves 210. The substrate may be formed of any suitably rigid material upon which appropriate grooves may be formed in or on. Suitable materials include aluminum, silicon, silica, glass, plastic, and the like. A particular example of a glass product that may be used for substrate 222 is ultra low expansion (ULE) glass manufactured by Coming, Inc., of Coming, New York.

Note that FIGS. 2A-2C illustrate an embodiment in which the diffraction efficiency of diffraction grating 200 is spatially varied by reducing the depth of the diffraction grooves away from reference location 220. An alternative is to increase the depth of the diffraction grooves to provide the necessary decrease in diffraction efficiency. Such an embodiment would include, once again, diffraction grating 200 having diffraction grooves of an optimum depth located at or near a reference location such as the center of the grating. However, in this embodiment, the depth of the diffraction grooves increases rather than decreases with increasing radial distance from reference location 220.

Although Figs. 2A-2C depict a diffraction grating having a substantially planar diffraction surface, other configurations are possible. For example, the diffraction grating may be formed with a diffraction surface that is concave or convex with respect to incident light beams. Specific examples of these types of non-planar diffraction gratings will be described in more detail in conjunction with later figures.

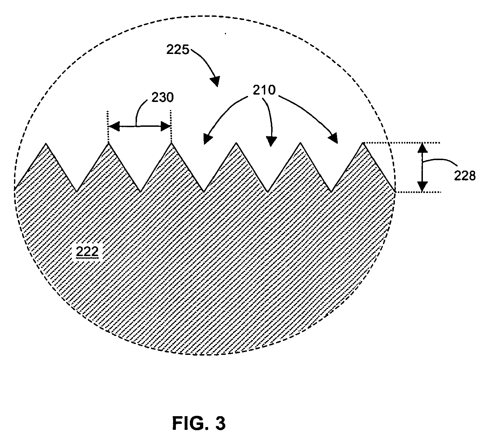

Fig. 3 is an enlarged partial sectional view of diffraction surface 225 of diffraction grating 200. The basic shape of the diffraction surface is substantially planar and is defined by a series of diffraction grooves 210.

As shown, each diffraction groove 210 generally defines an indentation that has a profile bounded by two generally planar surfaces of substantially equal size that join to form a symmetric "V" shape. Groove depth 228 is the distance between the bottom of the groove and a plane defined by adjacent peaks of the groove. Groove pitch 230 is the distance between the bottoms of adjacent grooves, or equivalently the distance between adjacent peaks. Groove pitch is typically uniform across the entire diffraction grating, but this is not a requirement and diffraction gratings having grooves with varying pitch, which also results in a change in the diffraction efficiency, may also be used. For example, increasing the pitch of the diffraction grooves results in a decreased diffraction efficiency. A varying diffraction efficiency may therefore be achieved by increasing the pitch of the diffraction grooves as a function of the distance from a reference point of the grating on which the diffraction grooves are located.

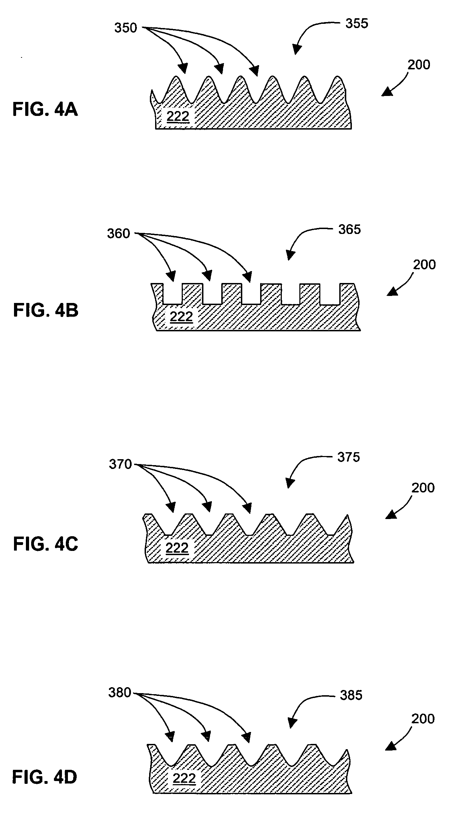

A particular example of a diffraction grating having a V-shaped groove profile is depicted in Figs. 2A-2C and 3, but many other groove profiles are possible. For example, Fig. 4A shows a partial cross-sectional view of a diffraction grating in which diffraction surface 355 has sinusoidal diffraction grooves 350. In Fig. 4B, diffraction surface 365 has rectangular diffraction grooves 360 in which each groove has a sharply rising surface followed by a top surface, followed by a sharply falling surface, followed by a bottom surface. Fig. 4C shows diffraction surface 375 having diffraction grooves 370 each defined by a surface that rises at an acute angle relative to the plane of the diffraction surface, followed by a top surface, followed by a surface that falls at an acute angle relative to the plane of the diffraction surface, followed by a bottom surface. Fig. 4D shows diffraction surface 385 having truncated sinusoidal diffraction grooves 380.

Other profile possibilities include tilting the profile of a sinusoidal diffraction surface, changing the angles along the surface of a groove, changing the sizes of the surfaces of a groove, changing curvature parameters of the groove, and implementing various types of groove shapes in a single grating.

Each diffraction groove profile will exhibit a particular diffraction efficiency. Accordingly, another technique for spatially varying the diffraction efficiency is to vary the groove profile as a function of the distance from a predetermined point of the grating which the grooves are located.

The grooves of the diffraction surface may be formed using any suitable technique. For example, angular grooves can be formed by passing a diamond-tipped scribe over the surface of a diffraction grating, or by using conventional ion-beam milling technology. Photolithography is another well-known technique that may be used to form the grooves of the diffraction grating.

Another technique for spatially varying the diffraction efficiency is to vary the reflectivity of the grating. One way to accomplish this is to vary the thickness of a reflective metallic layer, for example, that is formed over the diffraction grooves. In such an embodiment, the metallic layer would be thick enough at reference location 220 to accommodate the full skin effect so that the incident light is fully reflected. The thickness of the metallic layer is reduced based upon the radial distance from the reference location. Thus, in some locations of the optical grating, portions of the incident light pass through the metallic layer and are reflected less efficiently. Accordingly, diffraction efficiency may be varied by decreasing the reflectivity of the diffraction grooves as a function of the radial distance from a reference location on the grating.

Another option is to spatially vary the surface quality of the diffraction grooves over various locations of the grating. For example, in areas where an increase in diffraction efficiency is desired, diffraction grooves with optically smooth surfaces may be used. To decrease the diffraction efficiency, diffraction grooves having surface imperfections, such as scratches, digs, waving and other scattering sites may be implemented.

Implementing diffraction grooves as physical grooves in or on the surface of a substrate is a commonly used technique, but other methods may be used. For example, the diffraction grooves may alternatively be formed as non-grooved diffraction regions having a particular refractive index contrast. The refractive index contrast of the diffraction regions vary over the substrate in accordance with the invention to spatially vary the diffraction efficiency of the grating. For example, an increase in diffraction efficiency may be obtained by increasing the index of refraction of a diffraction region relative to the index of refraction of adjacent diffraction regions. Conversely, decreasing the index of refraction of a diffraction region, relative to the index of refraction of adjacent diffraction regions, would cause a decrease in diffraction efficiency.

The diffraction efficiency of a diffraction groove is wavelength dependent. That is, diffraction grooves having a particular depth, for example, may provide maximum diffraction efficiency at one wavelength, but such grooves exhibit a lower diffraction efficiency at other wavelengths.

In many situations, varying the depth of the diffraction grooves of the grating will provide the desired decrease or increase in diffraction efficiency. However, with light having a broader range of wavelengths, the desired decrease (or increase) in diffraction efficiency may not be obtained across the whole wavelength range. This is because of the differences in diffraction efficiency of the various wavelengths relative to the depth of the diffraction grooves. Accordingly, to achieve a desired variation of diffraction efficiency with broadband light, it may be beneficial to also change other grating design parameters, such as the groove shape, pitch, or reflectivity, to achieve the desired variation of diffraction efficiency over the entire wavelength range.

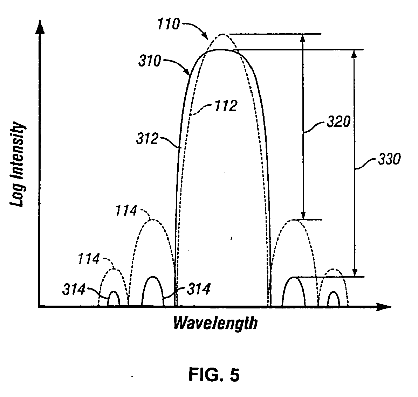

Fig. 5 is a graph comparing the transmission spectrum of Fig. 1A with the transmission spectrum of an exemplary embodiment of diffraction grating 200. Each transmission spectrum is graphed as the logarithm of the relative intensity of transmission through the grating as a function of the wavelength of the input light beam.

As described above with reference to Fig. 1A, transmission spectrum 110 of the exemplary prior-art diffraction grating includes a single primary peak 112 and a number of side lobes 114. The prior-art diffraction grating has an intensity difference 320, which is the difference in transmission intensity between primary peak 112 and the strongest side lobe 114. Similarly, transmission spectrum 310 of diffraction grating 200 includes a single primary peak 312 and a number of side lobes 314. Diffraction grating 200 has an intensity difference 330, which is the difference in transmission intensity between primary peak 312 and the strongest side lobes 314. Intensity differences 320 and 330 indicate the maximum dynamic range of their respective diffraction grating.

Comparing the two transmission spectra, the strongest side lobe 314 of diffraction grating 200 is significantly lower in transmission intensity than the strongest side lobe 114 of the prior art grating. Intensity difference 330 of diffraction grating 200 is substantially larger than intensity difference 320 of the prior art diffraction grating whose transmission spectrum is shown in Fig. 1A. Thus, the maximum dynamic range of diffraction grating 200 is substantially larger than the prior-art diffraction grating of Fig. 1A.

Further, each side lobe 314 of diffraction grating 200 has a significantly narrower wavelength range and a significantly decreased maximum transmission intensity than corresponding side lobe 114 of the prior art grating. Compared to transmission spectrum 110, transmission spectrum 310 reduces the likelihood that an input light beam component at an undesired wavelength will have a non-negligible intensity in the output of the diffraction grating.

Moreover, primary peak 312 is significantly broader in wavelength range than primary peak 112. This may allow a somewhat wider range of desired wavelengths to be selected by the diffraction grating. A wider wavelength range may allow larger tolerances for the wavelengths used as components of a multi-wavelength light beam in an optical communication system.

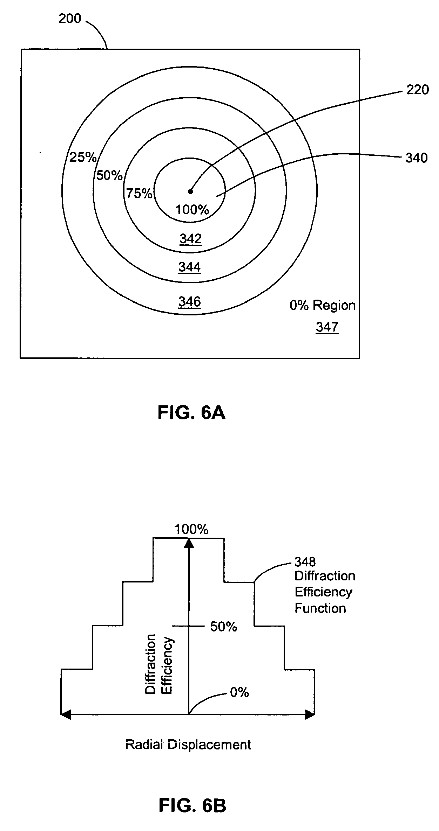

Fig. 6A shows one example of a varying diffraction efficiency that may be obtained using diffraction grating 200. As shown, the diffraction grating has a series of discrete regions ranging in diffraction efficiency between maximum diffraction efficiency near the center of the grating and minimum diffraction efficiency at the edges of the grating.

Maximum diffraction efficiency region 340 is shown as a circular region that is generally, but not necessarily, centered on the axis of the input light beam. The portion of an input light beam incident on region 340 is completely diffracted by grating 200. First intermediate diffraction efficiency region 342 is an annular region bounded on the inside by region 340 and on the outside by second intermediate diffraction efficiency region 344. Region 344 in turn is bounded by third diffraction efficiency region 346. Region 346 is shown bounded by final diffraction efficiency region 347, which is a region of minimum diffraction efficiency in which none, or substantially none, of the light incident on this region is diffracted.

Fig. 6B is a graph of the diffraction efficiency function of the diffraction grating of Fig. 6A. In this figure, diffraction efficiency function 348 is graphed as the diffraction efficiency of the grating as a function of the radial distance from a reference location of the grating. Diffraction efficiency function 348 varies symmetrically between maximum diffraction efficiency for light that is incident at or near reference location 220, and decreases in diffraction efficiency as the radial distance from the reference location increases.

Diffraction efficiency function 348 depends upon the number of diffraction efficiency regions and the diffraction efficiencies of these regions. The grating shown in Fig. 6A has a series of annular diffraction efficiency regions of gradually decreasing diffraction efficiencies, thus providing a substantially symmetric diffraction efficiency function 348. The diffraction efficiency function shown in Fig. 6A can be achieved by changing any of the grating design parameters as described herein. In general, the diffraction efficiency of each of the diffraction grooves or regions decreases as its distance from a reference location increases.

Fig. 6B shows a stepped diffraction efficiency function 348. Each step of this efficiency function is associated with a particular diffraction efficiency region of the grating of Fig. 6A. The difference between each step of the efficiency function depends upon the difference in diffraction efficiency between adjacent diffraction efficiency regions of grating 200. Increasing the difference in diffraction efficiency between adjacent diffraction efficiency regions causes the height of each step of the efficiency function to increase. Conversely, decreasing the difference in diffraction efficiency between adjacent diffraction efficiency regions results in the height of each step of the efficiency function to decrease.

Diffraction grating 200 includes five diffraction efficiency regions, each having a different diffraction efficiency. However, no particular number of regions or particular diffraction efficiency is required or desired. Increasing the number of diffraction efficiency regions results in a smoothing of the diffraction efficiency function. One example is a diffraction grating having 100 diffraction efficiency regions, each region differing in diffraction efficiency by 1 percent. Such a grating would have a relatively smooth diffraction efficiency function, in contrast to the stepped efficiency function of Fig. 6B.

In addition, the difference in diffraction efficiency between adjacent diffraction efficiency regions does not have to remain the same for the entire diffraction grating. For instance, adjacent diffraction efficiency regions nearest reference location 220 can have diffraction efficiencies that differ by 0.5 ― 1 percent. As the radial distance from the reference location increases, the diffraction efficiency difference between adjacent diffraction efficiency regions may also increase resulting in adjacent outer diffraction efficiency regions having diffraction efficiencies that differ by 20-35 percent, for example. Accordingly, varying the difference in diffraction efficiency based upon the radial distance from reference location 220 would result in a diffraction efficiency function that resembles a Gaussian function, or a higher order Gaussian function.

A diffraction grating is typically selected based upon the size and geometry of the light beam that is to be diffracted. For example, a grating having a series of annular regions of differing diffraction efficiencies, such as the grating depicted in Fig. 6A, is typically implemented for diffracting circular light beams. Similarly, a grating having a series of rectangular or elliptical regions, for example, of differing diffraction efficiency may be utilized for respectively diffracting rectangular or elliptical light beams.

Diffraction grating 200 may also have regions of differing diffraction efficiency of varying geometries to accommodate asymmetrical light beams. For example, the input light beam may be asymmetrical in that the light beam does not have a perfectly spherical wavefront and circular beam.

Referring back to Fig. 5, the transmission spectrum 310 of diffraction grating 200 is shown having two side lobes 314 located on either side of primary peak 312. Because the transmission spectrum depicted in this figure is for a symmetrical light beam, the side lobes 314 on the left and right sides of spectrum 310 are also symmetrical. Asymmetrical light beams, on the other hand, would have a corresponding asymmetry in side lobes 314. Specifically, for an asymmetrical light beam, side lobes located on one side of primary peak 312 would have a transmission intensity that differs from corresponding side lobes located on the opposite side of primary peak 312. To accommodate asymmetrical light beams, while providing the desired intensity difference, the diffraction grating may have asymmetrical diffraction efficiency regions that correspond to the asymmetry of the input light beam.

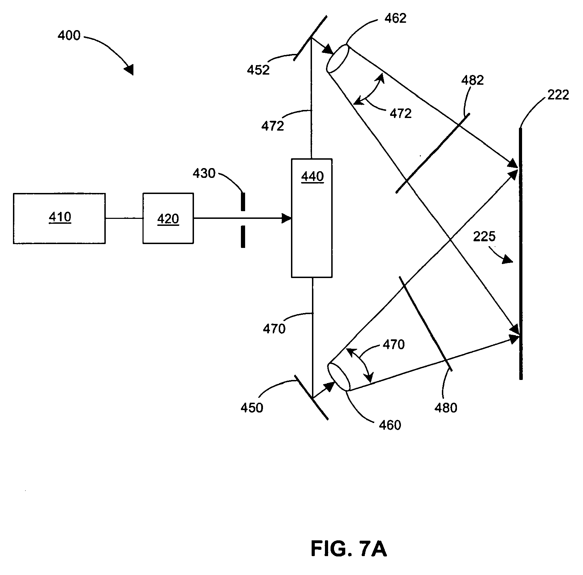

Fig. 7A is a block diagram showing diffraction grating fabrication system 400. The system generally includes laser 410, beam expander 420, spatial filter 430, and beam splitter 440. Mirrors 450 and 452 are associated with imaging components 460 and 462, respectively. This system will be described in connection with forming diffraction grating 200, for example.

In operation, laser 410 generates an exposure beam that is expanded by the beam expander and spatially filtered by spatial filter 430. The exposure beam enters beam splitter 440 where the beam is split into two exposure beams, 470 and 472. Exposure beams 470 and 472 are reflected by mirrors 450 and 452, respectively. Imaging component 460 directs exposure beam 470 onto apodization filter 480, while imaging component 462 directs exposure beam 472 onto apodization filter 482. Apodization filters 480 and 482 individually change the intensity of their respective exposure beams in a spatially dependent manner. After passing through their respective apodization filters 480 and 482, exposure beams 470 and 472 are directed onto surface 225 of substrate 222. This optical configuration causes exposure beams 470 and 472 to overlap and interfere with each other, according to the well-known principles of light wave interference and holography.

Surface 225 is coated with a suitable positive or negative photoresist. When exposed to the interference pattern produced by exposure beams 470 and 472, the photoresist records the interference pattern. A suitable negative photoresist development process, for example, removes portions of the photoresist that were not exposed to the interference pattern, leaving portions of the photoresist that were exposed to the interference pattern. The surface may be further processed by etching, forming a series of diffraction grooves as shown in Figs. 2A, for example. The remaining photoresist may be removed prior to use, but this is not a requirement. To form a reflective diffraction grating, a reflective metal layer, for example, is formed over the patterned surface using known deposition techniques.

The interference pattern formed by exposure beams 470 and 472 determines the design pattern of the grating. Possible grating design parameters that may be changed by modifying the interference pattern include the shape, size, depth, profile, and pitch of the diffraction grooves. Any of the various techniques used to create diffraction grooves having a spatially varying depth, as described below, may be used to change the other grating design parameters.

As a first example, the depth of diffraction grooves formed in substrate 222 can be changed by changing the intensity of exposure beams 470 and 472. A spatially dependent change in groove depth can therefore be realized using exposure beams 470 and 472, each exhibiting a spatially dependent intensity profile. A spatially dependent intensity profile may be achieved using, for example, apodization filters 480 and 482.

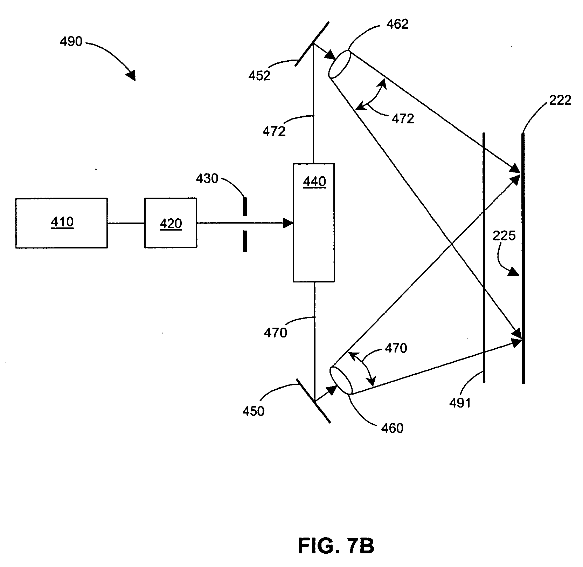

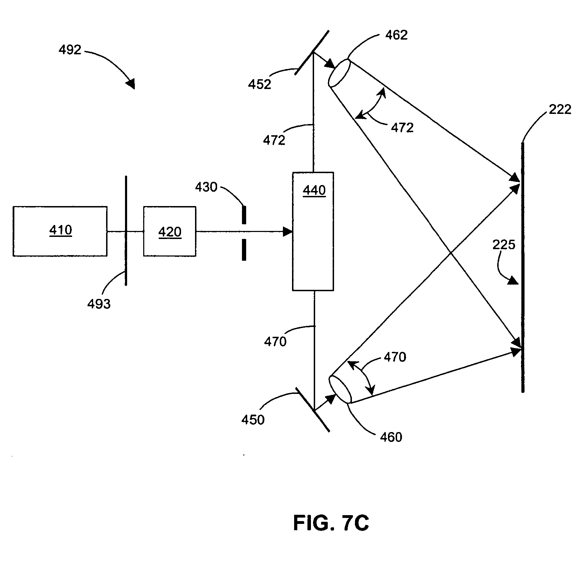

In accordance with an alternative embodiment, a spatially dependent intensity profile can be achieved using a single apodization filter. For instance, Fig. 7B shows diffraction grating fabrication system 490 having apodization filter 491 positioned between substrate 222 and imaging components 460 and 462. In this embodiment, apodization filter 491 filters both exposure beams 470 and 472. Fig. 7C depicts yet another embodiment in which diffraction grating fabrication system 492 includes a single apodization filter 493 positioned between laser 410 and beam expander 420. If desired, apodization filter 493 can be alternatively positioned between beam expander 420 and spatial filter 430, or positioned between spatial filter 430 and beam splitter 440.

Returning to Fig. 7A, another alternative is to remove apodization filters 480 and 482. In such an embodiment, the interference pattern formed by exposure beams 470 and 472 can be modified by changing the incidence angle of exposure beams 470 and 472 relative to the normal of substrate 222. This change in incidence angle causes a change in the groove depth of a diffraction grating formed from substrate 222.

Another example of a non-apodization filter embodiment utilizes the inherent Gaussian intensity profile of the exposure beams generated by laser 410. In this embodiment, the interfering exposure beams 470 and 472 directly create a spatially dependent intensity pattern, thus resulting in diffraction grooves having the desired spatially dependent depth. Similarly, spatially distorting exposure beams 470 and 472 will lead to an effective spatially dependent angle or change in frequency or pitch of the interference pattern. This results in diffraction grooves having spatially dependent pitch.

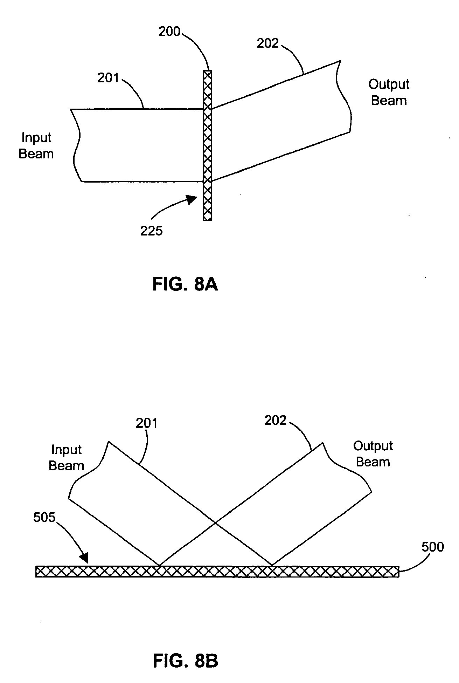

Fig. 8A is a diagram showing a generalized example of an optical setup for diffraction grating 200. In this example, diffraction grating 200 is configured as a substantially planar transmission grating. In this figure, input beam 201 is incident on diffraction surface 225 of the diffraction grating. At least a portion of the input beam is diffracted and passes through the grating to provide output beam 202. The input beam is diffracted according to the spatially varying diffraction efficiency utilized in the grating.

Input beam 201 may be provided to the diffraction grating by an input source such as a device having a pinhole or slit, an optical waveguide, a single mode or multi-mode optical fiber, and the like. The diffraction grating may form part of devices such as spectral filters and optical spectrum analyzers, among others.

Fig. 8B is a diagram showing diffraction grating 500 configured as a substantially planar reflective grating. Similar to other embodiments, diffraction grating 500 also has a spatially varying diffraction efficiency which may be implemented using any of the techniques discussed above. Since grating 500 is a reflective grating, it also includes materials that reflect some or all of the light incident on the grating. During operation, an input beam 201 is directed onto diffraction surface 505 where the beam is diffracted and reflected to produce output beam 202.

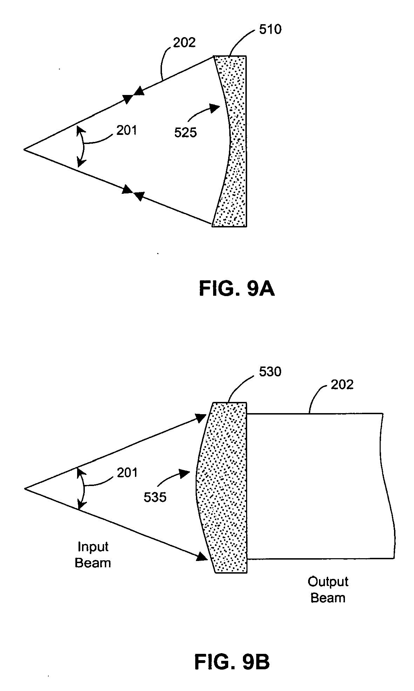

Figs. 8A and 8B show substantially planar diffraction gratings, but other designs are possible. For example, Fig. 9A provides an example of a diffraction grating having a diffraction surface 525 that is concave with respect to input beam 201. This grating embodiment reflects the input beam as a focused and diffracted output beam 202.

Another alternative is shown in Fig. 9B. In this figure, diffraction grating 530 comprises a diffraction surface 535 that is convex with respect to input beam 201. In this convex grating embodiment, grating 530 is a transmission grating that diffracts the input beam based upon a spatially varying diffraction efficiency, resulting in a focused and diffracted output beam 202.

Although diffraction gratings 510 and 530 are shown diffracting a diverging input beam, these gratings may also be used to diffract converging or collimated input light beams. Similar to other embodiments, diffraction gratings 510 and 530 have spatially varying diffraction efficiencies.

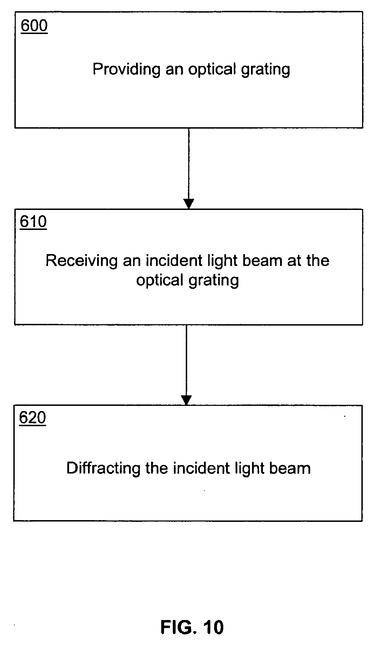

Fig. 10 is a flowchart showing exemplary operations for diffracting a light beam according to some embodiments of the invention. At block 600, an optical grating having a spatially varying diffraction efficiency is provided. In block 610, a light beam is received at the grating. In block 620, the light is diffracted by the optical grating. According to one embodiment, the diffraction efficiency in which the light beam is diffracted varies, either increasing or decreasing, as a function of distance from a reference location that the light beam is received at the optical grating.

While the invention has been described in detail with reference to disclosed embodiments, various modifications within the scope of the invention will be apparent. It is to be appreciated that features described with respect to one embodiment typically may be applied to other embodiments. Therefore, the invention properly is to be construed with reference to the claims.

## Claims

1. An optical grating (200), comprising:
a substrate (222); and
diffraction means (225) located on said substrate, said diffraction means varying in diffraction efficiency as a function of distance from a reference location (220) on said substrate.

2. The optical grating of claim 1, wherein said diffraction efficiency of said diffraction means decreases as said distance from said reference location increases.

3. The optical grating of claim 1, wherein said diffraction efficiency of said diffraction means increases as said distance from said reference location increases.

4. The optical grating of one of the preceding claims, wherein said diffraction means comprises diffraction grooves (210), and the depth (228) of said diffraction grooves decreases as said distance from said reference location increases.

5. The optical grating of one of the preceding claims, wherein said diffraction means comprises diffraction grooves (210), and the pitch (230) of said diffraction grooves increases as said distance from said reference location increases.

6. The optical grating of one of the preceding claims, wherein said diffraction means comprises diffraction grooves (210), and the profile of said diffraction grooves changes as said distance from said reference location increases.

7. The optical grating of one of the preceding claims, wherein said diffraction means comprises diffraction grooves, and the reflectivity of said diffraction grooves decreases as said distance from said reference location increases.

8. The optical grating of one of the preceding claims, wherein said diffraction means includes diffraction efficiency regions, each having a progressively higher diffraction efficiency as said distance from said reference location increases.

9. An optical grating (200) of one of the preceding claims wherein said diffraction means comprises a diffracting surface (225) located on said substrate.

10. The optical grating of claim 9, wherein said diffraction surface is concave relative to an incident light beam.
